# EUROPEAN PATENT SPECIFICATION

(11) **EP 4 314 490 B1**
(45) Date of publication and mention of the grant of the patent: **06.05.2026**
(21) Application number: 22718223.5
(22) Date of filing: 29.03.2022
(51) Int. Cl.: F01C 17/00, F04C 18/12, F04C 18/16, F04C 25/02, F04C 28/28, F04C 29/00, F16H 55/18

(54) **GEAR WEAR DETECTION IN INTERMESHING RUNNING GEARS**
ZAHNRADVERSCHLEISSERKENNUNG IN INEINANDERGREIFENDEN ZAHNRÄDERN
DÉTECTION D'USURE D'ENGRENAGE DANS DES ENGRENAGES DE ROULEMENT ENGRENÉS

(30) Priority: 31.03.2021 GB 202104557
(43) Date of publication of application: 07.02.2024
(73) Proprietor: Leybold GmbH, 50968 Köln (DE)
(72) Inventor: SCHILLER, Dirk, 50968 Cologne (DE); SCHOENWALD, Freddy, 50968 Cologne (DE)
(74) Representative: Arnold, Emily Anne
(86) International application number: PCT/EP2022/058187
(87) International publication number: WO 2022/207587

(56) References cited:
- EP-A2- 1 505 296
- WO-A1-2020/007665
- US-A- 4 890 989
- US-A- 4 900 239

## Description

The present invention relates to a pair of intermeshing oil-free running gears for dual- or multi-shaft vacuum pumps. Further, the present invention relates to a vacuum pump system comprising a pair of intermeshing oil-free running gears and an apparatus, comprising such a vacuum pump system and further comprising a gear wear detection device. Further, the present invention relates to a method for gear wear detection in intermeshing running gears of a dual- or multi-shaft vacuum pumps.

Known gear wear detection in intermeshing oil-free running gears involves the inspection of gear components and the measurement of gear wear parameters, which usually requires an interruption of operation and partial disassembly of the machine comprising the running gears.

One disadvantage of known solutions for gear wear detection are high costs caused by the interruption of operation and the inspection of the machine comprising the running gears. Other disadvantages include complex disassembly and reassembly of machine parts and even potential failure of the machine comprising intermeshing oil-free running gears if gear wear is not detected in time.

WO2020/007665 describes a multi-shaft vacuum pump comprising intermeshing gears according to the prior art.

An object of the present invention is to provide an efficient and reliable solution for gear wear detection in intermeshing running gears, thereby overcoming the disadvantages of the prior art.

The object is achieved by the pair of intermeshing preferably oil-free running gears in particular for dual- or multi-shaft vacuum pumps according to claim 1; the vacuum pump system, comprising a dual- or multi-shaft vacuum pump and a pair of intermeshing preferably oil-free running gears according to claim 6; the apparatus, comprising a vacuum pump system and further comprising a gear wear detection device according to claim 9; and the method for gear wear detection in intermeshing preferably oil-free running gears according to claim 13.

The pair of intermeshing running gears for dual- or multi-shaft vacuum pumps according to the invention comprises a first running gear and a second running gear meshing with each other, wherein at least the first running gear comprises a first gearwheel and a second gearwheel. The first and the second gearwheel of the first running gear are axially arranged. In this way the two gearwheels of the first running gear build a single running gear configured to mesh with the second running gear. Therein, preferably, the intermeshing running gears are operated oil-free.

According to the invention, the first gearwheel comprises a predetermined number of first cogs of the same dimension and the second gearwheel comprises a at least one second cog, wherein the second cog has a dimension smaller to a predetermined amount than the dimension of the first cogs. The first and the second cogs provide contact surfaces for the second running gear as the first and the second running gears are designed in an intermeshing manner. Preferably, the differences in dimension of the first and second cogs to a predetermined amount w concern those parts of the first and the second cogs that are in direct contact, when the first and the second running gears are meshing.

Further, according to the invention the first gearwheel is made of a material with an elastic modulus different than the elastic modulus of the material of the second gearwheel. As the first gearwheel is made of a material with an elastic modulus different than the elastic modulus of the material of the second gearwheel, the acoustic properties of the first and the second gearwheel, respectively will be different. In particular, the acoustic frequency spectrum of the sound produced by the second running gear being in contact with the first gearwheel will be distinct from the acoustic frequency spectrum of the sound produced by the second running gear being in contact with the second gearwheel. This may have the advantage that via the detected differences in the acoustic frequency spectra gear wear can be detected.

Preferably, the predetermined amount to which the dimension of the second cogs are smaller than the dimension to the first cogs corresponds to the maximum permissible wear. This may have the advantage that only upon the maximum allowable wear is reached, the second cogs come into contact with the cogs of the second running gear and before the maximum admissible wear is reached, only the first cogs of the first gearwheel will be in contact with the cogs of the second running gear. For both situations a characteristic sound is generated suitable to determine wear of the gear.

Preferably, the first gearwheel and the second gearwheel are arranged axially separated on the same shaft or in direct contact with each other. Preferably, the first gearwheel and the second gearwheel are designed in sandwich-construction, such that the second gearwheel adheres permanently to the first gearwheel.

Preferably, the material with the first elastic modulus is one of polymer and the material with the second elastic modulus is one of metal. This may have the advantage that these materials have different elastic modulus and thus, have distinct acoustic properties. This may have the further advantage that the gearwheel made from polymer can run without lubrication in combination with a mating gearwheel made from metal.

Preferably, the second running gear is made of a material with the same elastic modulus E' as the material of the second gearwheel of the first running gear. This may have the advantage that only two different materials have to be used in order to produce the two different frequency spectra depending on the second running gear being in contact with the first gearwheel or the second gearwheel, respectively. Further, wear mainly exists at the first gearwheel. Further, this may have the advantage that low wear rates can be achieved, when the first gearwheel comes into direct contact with the second running gear.

Preferably, the predetermined number of second cogs is greater than one and less or equal than the predetermined number of first cogs. This may have the advantage that the differentiation between the frequencies of sounds produced before and upon reach of the maximum permissible wear can be improved. By selecting the number of second cogs, the indication frequency can be shifted to lower frequencies away from eigenfrequencies of the apparatus, i.e. the vacuum pump.

According to the invention a vacuum pump system, comprising a dual- or multi-shaft vacuum pump and the pair of intermeshing oil-free running gears as described above is provided. The dual- or multi-shaft vacuum pump comprises a motor, a first shaft and at least one second shaft, wherein the first shaft and the second shaft are synchronously driven by the motor. The first shaft has a pumping element and the second shaft has a pumping element, which cooperates with the pumping element of the first shaft in order to convey a gaseous medium from an inlet to an outlet.

According to the invention the first shaft comprises the first running gear and the second shaft comprises the second running gear. Due to the different acoustic frequency spectra produced by the first and the second running gear before and upon reaching of the maximum permissible wear, respectively gear wear can be detected in due time, without interruption of operation or any disassembly. Thus, severe damage of the pump or on parts of the pump caused by gear wear can be prevented.

Preferably, the first shaft and the at least one second shaft are driven via a common drive belt. Therein the first and the second running gear may act as emergency running gears for the vacuum pump.

Preferably, only one of the first shaft and the second shaft is driven by the motor via a drive belt, wherein the first shaft and the second shaft are synchronized by the first running gear and the second running gear. This may have the advantage that the first and the second running gear may act as running gears for the vacuum pump synchronizing the first and the second shafts. Due to the different acoustic frequency spectra produced by the first and the second running gear before and upon reaching of the maximum permissible wear, respectively gear wear can be detected in due time, without interruption of operation or any disassembly. Thus, severe damage of the pump or on parts of the pump caused by gear wear can be prevented. Preferably, the drive belt driving the one of the first shaft or the second shaft is a V-belt.

Preferably, the system comprises two modes of operation. In the first mode of operation the second running gear is in direct contact only with the first gearwheel. In the second mode of operation the second running gear is in direct contact with the second gearwheel, when the dimension of the first gearwheel is reduced by the predetermined amount due to material wear. Further, the first frequency spectrum of the sound produced by the first running gear and the second running gear during the first mode of operation is different from the second frequency spectrum of the sound produced by the first running gear and the second running gear during the second mode of operation. This may have the advantage that in the first mode of operation the vacuum pump can still continue to operate without the risk of severe damage at the vacuum pump. When the second frequency spectrum is detected, necessary maintenance measures can be taken to ensure the protection of the vacuum pump and its components.

Preferably, during normal operation the running gears are not in contact with each other. In this case the running gears act as emergency running gears that only contact each other in an emergency mode of operation. This may have the following advantage: In the vacuum pump system according to the invention, the first shaft, comprises the first running gear and the second shaft comprises the second running gear. The first and the second shaft are synchronously driven or rotated, respectively, preferably by the motor via a common drive belt. Here, the drive belt particularly is a toothed belt. If the drive belt fails to maintain synchronisation of rotation of the two shafts, the provided emergency running gears thus carry out the required synchronization of the shafts in order to prevent that the pumping elements contact each other and are thus damaged. A failure of the drive belt may occur, for example, through tearing or, if the drive belt is designed as a toothed belt, through loss or wear of teeth or elongation of the drive belt, for example due to wear. Since drive belts are inherently subjected to a certain wear in the course of their lifetime, a secure operation of a dual- or multi-shaft vacuum pump, in which the synchronization of the shafts is performed by means of a drive belt, is possible by providing emergency running gears which ensure the required synchronization if the drive belt fails.

According to the invention, an apparatus is provided comprising a vacuum pump system as described above and further comprising a gear wear detection device. The gear wear detection device according to the invention comprises a detection module that is configured to detect the sound produced by the running gears and further comprises an analysis module that is configured to analyse the frequency spectrum of the detected sound. The gear wear detection device further comprises a determination module that is configured to determine wear of the running gears dependent on a change of the analysed frequency spectrum. This may have the advantage that a gear wear can easily, reliably and automatically be detected via a gear wear detection device that is configured to detect and analyse acoustic frequency spectra without the need of interruption of operation or disassembly of the vacuum pump system.

Preferably, the determination module of the apparatus is configured to determine a deviation in the detected frequency spectrum produced by the running gears in the second mode of operation. This may have the advantage that the gear detection device can distinguish between a first mode of emergency operation and a second mode of emergency operation and thus, gear wear can be determined in due time based on the change of the analysed frequency spectrum and necessary maintenance measures can be taken to ensure further operation of the vacuum pump system.

Preferably, the gear wear detection device further comprises a displaying module that is configured to display a gear wear notification to the user if the analysed frequency spectrum is equal to the second frequency spectrum produced by the running gears in the second mode of operation. This might have the advantage that a user operating the gear wear detection device will receive a relevant information if gear wear is detected by the gear wear detection device, without the need of manual analysis and/or continuous observation of the detected signal by the user. Thus, due to the displayed information that gear wear has been detected, the user does not have to be skilled in the analysis frequency spectra and/or the determination of a frequency change that indicated a gear wear.

Preferably, the gear wear detection device is a mobile terminal. This might have the advantage that a user operating the gear wear detection is not bound to a specific location or site. A mobile terminal that is configured as a gear wear detection device can be used on different vacuum pump systems on different operational sites. Further, mobile terminals are compact and easy to use.

According to the invention, a method for gear wear detection in intermeshing oil-free running gears as described above is provided. The method comprises detecting the sound produced by the running gears and analyzing the frequency spectrum of the detected sound. The method further comprises determining a wear of the running gears dependent on a change of the analyzed frequency spectrum. This may have the advantage that gear wear can be detected be easily and reliably without the need of interruption of operation or disassembly of the vacuum pump system. Thus, costs can be reduced and continuous operation can be ensured.

Preferably, the step of determining comprises determining if the analyzed frequency spectrum is equal to the frequency spectrum produced by the running gears in the second mode of operation. This may have the advantage it can be distinguished between a first mode of emergency operation where safe operation can still be ensured and a second mode of emergency operation where severe damage to the vacuum pump system is to be expected. Thus, gear wear can be determined in due time based on the change of the analyzed frequency spectrum and necessary maintenance measures can be taken to ensure further faultless operation of the vacuum pump system.

Preferably, the method further comprises displaying a gear wear notification to the user if the frequency spectrum is equal to the frequency spectrum produced by the running gears in the second mode of operation. This might have the advantage that a user will receive a corresponding information if gear wear is detected, without the need of manual analysis and/or continuous observation of the detected signal. Thus, due to the displayed gear wear notification the user can take appropriate measures to resolve the problem. Here, the user does not have to be skilled in the analysis frequency spectra and/or the determination of a frequency change that indicated a gear wear. Thus, the complexity of gear wear detection is reduced and the efficiency of the gear wear detection process can be improved.

Preferably, the method is carried out with an apparatus as described above. Features of the apparatus can be used to further provide specific details of the method.

In the following, the invention is described in more detail by means of preferred embodiments with reference to the accompanying drawings, in which
Figure 1 shows a pair of intermeshing running gears according to the invention,
Figure 2 shows an exploded view of the first running gear shown in Figure 1 according to the invention, and
Figure 3 shows a detailed view of the first running gear of Figure 1,
Figure 4 shows a vacuum pump system according to the invention,
Figure 5 shows a gear wear detection device according to the invention, and
Figure 6 shows a schematic view of a vacuum pump system and a gear wear detection device according to a preferred embodiment,
Figure 7 shows a flow diagram of a method for gear wear detection in intermeshing running gears according to the invention.

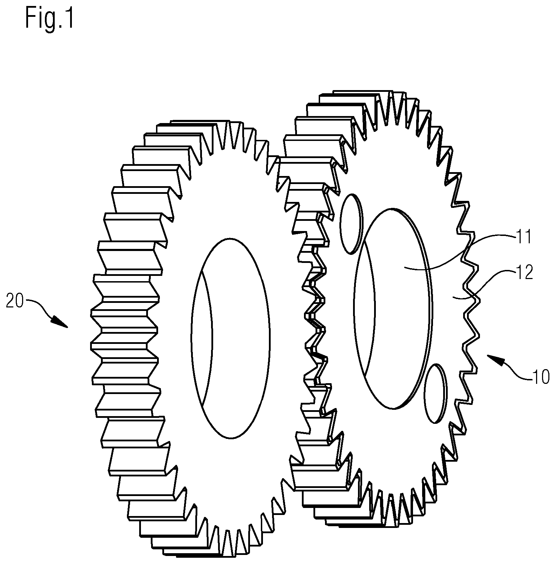

The pair of intermeshing running gears preferably for dual- or multi-shaft vacuum pumps as illustrated in Figure 1, comprises two running gears 10, 20 designed to mesh with each other.

As shown in Figure 1, at least the first running gear 10 comprises two components, a first gearwheel 11 and a second gearwheel 12 being axially arranged and in direct contact with each other.

Further, the first running gear 10 comprises a predetermined number of cogs n10 and the second running gear 20 comprises a predetermined number of cogs n20. Therein, the first running gear 10 comprises a predetermined number of first cogs n11 of the first gearwheel 11 and a predetermined number of second cogs n12 of the second gearwheel 12. Therein, the predetermined number of second cogs n12 of the second gearwheel 12 is at least one.

In the example of Fig. 1, the predetermined number of second cogs n12 is equal to the predetermined number of first cogs n11.

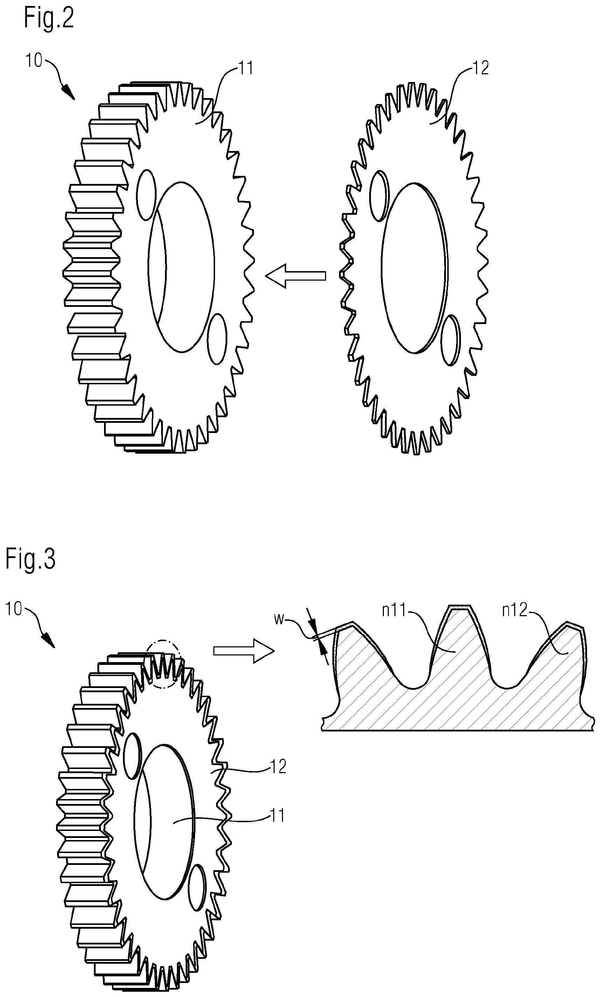

Further, the first cogs n11 of the first gearwheel 11 are of same dimension. In other words, all of the first cogs n11 of the first gearwheel 11 have the same size and shape. As shown in detail in Figure 3, the second cogs n12 of the second gearwheel 12 have a dimension smaller than the dimension of the first cogs n11 of the first gearwheel 11 to a predetermined amount w. Therein, the predetermined amount w corresponds to the maximum permissible wear. In the examples illustrated in Figures 1 - 3, the first and the second gearwheels 11, 12 are designed to have the same number of cogs n11, n12 and to have substantially the same shape except for the differences in dimension to the predetermined amount w corresponding to the maximum permissible wear. Therein, the maximum permissible wear corresponds to the maximum amount of relative movement between the pumping elements of the two shafts, as described in greater detail below, without coming into contact with each other.

In the examples shown in Figures 1 - 3, the first gearwheel 11 is made of a material with a first elastic modulus E and the second gearwheel 12 is made of a material with a different second elastic modulus E'. Further, in the example the second running gear 20 may be made of a material with the same elastic modulus E' as the material of the second gearwheel 12 of the first running gear 10.

In the examples shown in Figures 1 - 3, the first elastic modulus E is smaller than the second elastic modulus E'. In a preferred embodiment, the material with the first elastic modulus E is one of polymer and the material with the second elastic modulus E' is one of metal.

Materials with different elastic modulus show differences in their acoustic properties. Further, the frequency spectrum of the acoustic sounds produced by objects made of materials with different elastic modulus contacting each other is different than the frequency spectrum of the acoustic sounds produced by objects made of materials with same elastic modulus contacting each other.

In a first mode of operation m1, the second running gear 20 is in direct contact only with the first gearwheel 11 until the dimension of the first gearwheel 11 is reduced by the predetermined amount w due to material wear. In this first mode of operation m1, due to the contact of the first gearwheel 11 having an elastic modulus E and the second running gear 20 having a different elastic modulus E' a first acoustic frequency spectrum f1 is produced.

In a second mode of operation m2, when the dimension of the first gearwheel 11 is reduced by the amount w due to material wear, the second running gear 20 gets in direct contact with the second gearwheel 12. In this second mode of operation m2, due to the contact of the first gearwheel 12 having an elastic modulus E' and the second running gear 20 having the same elastic modulus E' a second acoustic frequency spectrum f2 is produced, which is distinct from the first frequency spectrum f1.

Hence, in the above example if the second running gear 20 and the first running gear come into contact with each other, the second running gear 20 will first be in contact only with the first gearwheel 11 of the first running gear 10. When, due to material wear, the dimension of the first gearwheel is reduced, the second running gear 20 will get into contact with the second gearwheel 12 of the first running gear 10. Here, a change in the frequency spectrum of the sound detected will occur, that can be detected and analyzed consecutively. Depending on the differences of the frequency spectra produced by the second running gear 20 being in contact with the first and the second gearwheel 11, 12, respectively, an indication for gear wear is provided.

Thus, through detection of the changes in the acoustic frequency spectrum produced by the running gears 10, 20 in the different modes of operation m1, m2, gear wear can be determined without the need for interruption of the operation or disassembly of the machine comprising the running gears 10, 20.

In another preferred embodiment, the predetermined number of second cogs n12 of the second gearwheel 12 is smaller than the predetermined number of first cogs n11 of the first gearwheel 11. Here, an even better differentiation of the two frequency spectra f1, f2 during the different modes of operation m1, m2 can be achieved.

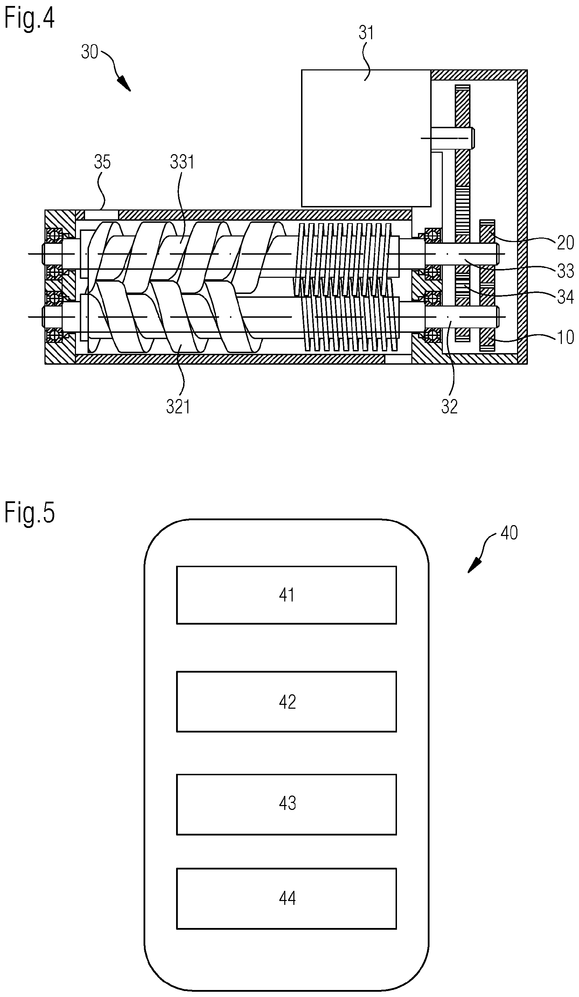

Figure 4 illustrates a vacuum pump system according to the invention, comprising a a dual- or multi-shaft vacuum pump 30 and the pair of intermeshing running gears 10, 20 according to any of the above. Therein, the vacuum pump can be built as screw pump, a claw pump, a roots pump or the like. Preferably, the intermeshing running gear is built as oil-free running gear.

The dual- or multi-shaft vacuum pump 30 shown in Figure 4 comprises a motor 31, a first shaft 32 and at least one second shaft 33. The first shaft 32 and the second shaft 33 are synchronously driven by the motor 31 preferably via a common drive belt 34. Further, the first shaft 32 has a pumping element 321 and the second shaft 33 has a pumping element 331, which cooperates with the pumping element 321 of the first shaft 32 in order to convey a gaseous medium from an inlet 35 to an outlet.

According to the invention, the first shaft 32 comprises the first running gear 10 and the second shaft 33 comprises the second running gear 20.

Therein, during normal operation the first running gear 10 of the first shaft 32 and the second running gear 20 of the second shaft 33 are not in contact with each other. In other words, the running gears 10, 20 are designed as emergency running gears, which in case an elongation of the drive belt 34, for example through wear, a loss of teeth or a tearing of the drive belt 34 occurs, ensure that the pumping elements 321, 331 do not come into contact with each other. and thus, prevent a severe damage to the pumping elements 321, 331.

Further, in the example shown in Fig. 4 in a first mode of operation m1 the second running gear 20 is in direct contact only with the first gearwheel 11. Here, the first mode of operation m1 corresponds to a first mode of emergency operation of the vacuum pump system. In this first mode of operation m1, the dimension of the predetermined number of second cogs n12 of the second gearwheel 12 is smaller than the dimension of the predetermined number of first cogs n11 of the first gearwheel 11.

In a second mode of operation m2, corresponding to the second emergency operation, the second running gear 20 is in direct contact with the second gearwheel 12, when the dimension of the first gearwheel 11 is reduced by the predetermined amount w due to material wear. Wear reduces the shape of the first cogs n11 to or at least close to the shape of the second cogs. Therein, by the dimension of the second cogs n12, contactless operation of the pumping elements 321, 331 is ensured.

The first frequency spectrum f1 of the sound produced by the first running gear 10 and the second running gear 20 during the first mode of operation m1 is different from a second frequency spectrum f2 of the sound produced by the first running gear 10 and the second running gear 20 during the second mode of operation m2 which difference can be detected and used in order to determine wear of the running gears 10, 20.

Thus, in the vacuum pump system illustrated in Figure 4 the emergency running gears 10, 20 are configured to produce different frequency spectra which can already be detected in a first mode of emergency operation m1 and thus appropriate measures can be either taken or planned to be taken in an optimal time window in order to ensure optimal and safe operation of the vacuum pump 30.

Figure 5 shows a schematic diagram of the gear wear detection device 40 according to the invention, comprising a detection module 41 that is configured to detect the sound produced by the running gears 10, 20.

The gear wear detection device 40 further comprises an analysis module 42 that is configured to analyze the frequency spectrum of the detected sound, and comprises a determination module 43 configured to determine a wear of the running gears 10, 20 dependent on a change of the analyzed frequency spectrum.

Therein, a user can either actively start the detection device or in planned intervals to check if gear wear has occurred, or alternatively operate the gear wear detection device continuously.

Thus, via the illustrated gear wear detection device 40, the sound produced by the running gears 10, 20 can be detected and determined if gear wear has occurred.

The determination module 43 in the example illustrated in Fig. 5 can be further configured to determine if the analyzed frequency spectrum is equal to the frequency spectrum f2 produced by the running gears 10, 20 in the second mode of operation m2 or at least a deviation occurs from the frequency spectrum of the first mode of operation m1.

In the example, the gear wear detection device 40 further comprises a displaying module 44 configured to display a gear wear notification to the user if the analyzed frequency spectrum is equal to the second frequency spectrum f2 produced by the running gears 10, 20 in the second mode of operation m2.

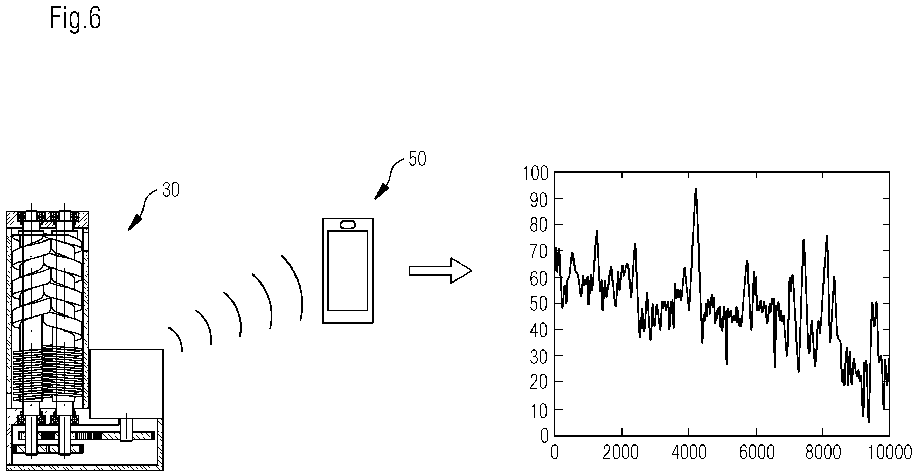

Figure 6 shows an embodiment of the present invention, wherein the gear wear detection device is a mobile terminal 50. The mobile terminal 50 comprises a detection module 51, configured to detect the sound produced by the running gears 10, 20 in any mode of operation. In an example the detection module 51 of the mobile terminal 50 corresponds to a built-in microphone or another internal audio signal receiving module. In another example, the detection module 51 might be any external audio signal receiver, connected to the mobile terminal 50 via wired or wireless connection configuration which might be directly attached to the vacuum pump. Further, the mobile terminal 50 comprises an analysis module 52 configured to analyze the frequency spectrum of the sound detected by the detection module. In an example, the analysis module 52 is a mobile terminal application configured to analyze frequency spectra of acoustic signals installed and executed on the mobile terminal 50. Alternatively, the analysis module 52 is configured on a server device including an analysis application, which can be accessed by the mobile terminal 50 via internet connection. Furthermore, the mobile terminal 50 comprises a determination module 53 configured to determine a wear of the running gears 10, 20 dependent on a change of the analyzed frequency spectrum. In an example, the determination module 53 might be an application installed on the mobile device 50. In another example, the determination module 53 might be an external application configured to be accessed by the mobile terminal 50. Preferably, the internal and/or external determination module 53 of the mobile terminal 50 is configured to determine if the analyzed frequency spectrum is equal to the frequency spectrum f2 produced by the running gears 10, 20 in the second mode of operation m2 or at least a deviation occurs from the frequency spectrum of the first mode of operation m1.

In the illustrated example, the mobile terminal 50 further comprises a displaying module 54 configured to display a gear wear notification to the user if the analyzed frequency spectrum is equal to the second frequency spectrum f2 produced by the running gears 10, 20 in the second mode of operation m2. In an example, the gear wear notification can be in form of a written and/or spoken text-based notification, a diagram showing the detected and analyzed frequency spectrum of the sound produced by the running gears 10, 20, and/or a sound or color-based information indicating a detected gear of the running gears 10, 20. In an example, the displaying module 54 corresponds to the built-in display of the mobile terminal 50. In another example, the displaying module 54 corresponds to any other external displaying device configured to being accessed by the mobile terminal 50 to display a gear wear notification to the user.

According to an example, the mobile terminal 50 is configured to be operated by a user to start the detection of the sound produced by the running gears 10, 20, the analysis of the frequency spectrum of the detected sound, the determination of a wear of the running gears 10, 20 dependent on a change of the analyzed frequency spectrum and the displaying of a gear wear notification to the user if the analyzed frequency spectrum is equal to the second frequency spectrum f2 produced by the running gears 10, 20 in the second mode of operation m2 or at least a deviation occurs from the frequency spectrum of the first mode of operation m1.

According to another example, the mobile terminal is configured to autonomously start the detection of the sound produced by the running gears 10, 20, the analysis of the frequency spectrum of the detected sound, the determination of a wear of the running gears 10, 20 dependent on a change of the analyzed frequency spectrum and the displaying of a gear wear notification to the user if the analyzed frequency spectrum is equal to the second frequency spectrum f2 produced by the running gears 10, 20 in the second mode of operation m2. Here, the autonomous operation of the mobile terminal 50 can be a continuous operation or an operation within any predetermined intervals.

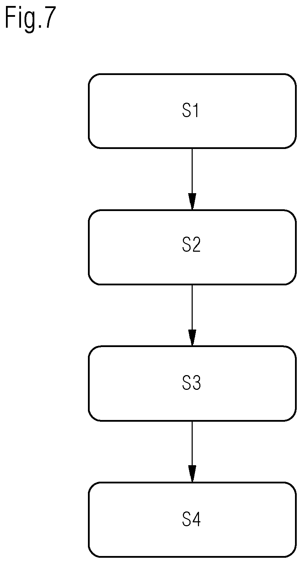

Figure 7 shows a flow diagram of a method for gear wear detection in intermeshing running gears according to the invention. Therein, the method might be implemented in the gear wear detection device 40, i.e. the mobile terminal 50.

The first step of the method comprises detecting S1 the sound produced by the running gears 10, 20. In the second step the method comprises analyzing S2 the frequency spectrum of the detected sound and in a third step the method comprises determining S3 wear of the running gears 10, 20 dependent on a change of the analyzed frequency spectrum.

Preferably, the step of determining S3 comprises determining if the analyzed frequency spectrum is equal to the frequency spectrum f2 produced by the running gears 10, 20 in the second mode of operation m2.

In a preferred embodiment, the method further comprises the step of displaying S4 a gear wear notification to the user if the frequency spectrum is equal to the frequency spectrum f2 produced by the running gears 10, 20 in the second mode of operation m2.

Thus, a pair of intermeshing preferably oil-free running gears in particular for dual- or multi-shaft vacuum pumps, a vacuum pump system comprising a dual- or multi-shaft vacuum pump and said pair of intermeshing running gears, an apparatus comprising said vacuum pump system and further comprising a gear wear detection device and a method for gear wear detection in said pair of intermeshing running gears is provided to easily, efficiently and reliably detect a gear wear in intermeshing preferably oil-free running gears, without interruption of operation and disassembly of the machine comprising the intermeshing running gears. Hence, the costs and the complexity of gear wear detection are effectively reduced and severe damages caused by late gear wear are prevented.

## Claims

1. A pair of intermeshing,oil-free running gears for dual- or multi-shaft vacuum pumps, comprising a first running gear (10) and a second running gear (20),
**characterized in that**
at least the first running gear (10) comprises a first gearwheel (11) and a second gearwheel (12),
wherein the first gearwheel (11) and the second gearwheel (12) are axially arranged, and
wherein the first gearwheel (11) comprises a predetermined number of first cogs (n11) of same dimension and the second gearwheel (12) comprises a predetermined number of second cogs (n12), wherein the predetermined number of second cogs (n12) is at least one, and
the predetermined number of second cogs (n12) have a dimension smaller than the dimension of the predetermined number of first cogs (n11) to a predetermined amount (w),
wherein the first gearwheel (11) is made of a material with a first elastic modulus (E) and the second gearwheel (12) is made of a material with a second elastic modulus (E'), and the first elastic modulus (E) and the second elastic modulus (E') are different.

2. The pair of intermeshing running gears according to claim 1, wherein the predetermined amount (w) corresponds to the maximum permissible wear.

3. The pair of intermeshing running according to claim 1 or 2, wherein the first gearwheel (11) and the second gearwheel (12) are arranged axially separated on the same shaft or in direct contact with each other.

4. The pair of intermeshing running gears according to claim 1, wherein the material with the first elastic modulus (E) is one of polymer and the material with the second elastic modulus (E') is one of metal.

5. The pair of intermeshing running gears according to any of the claims 1 - 4, wherein the predetermined number of second cogs (n12) is greater than one and less than the predetermined number of first cogs (n11).

6. A vacuum pump system, comprising a dual- or multi-shaft vacuum pump and
the pair of intermeshing oil-free running gears according to any of the claims 1 - 5, **characterized in that**
the dual- or multi-shaft vacuum pump (30), comprises
a motor (31),
a first shaft (32) and at least one second shaft (33), wherein the first shaft (32) and the second shaft (33) are synchronously driven by the motor (31) preferably via a common drive belt (34),
wherein the first shaft (32) has a pumping element (321) and the second shaft (33) has a pumping element (331) which cooperates with the pumping element (321) of the first shaft (32) in order to convey a gaseous medium from an inlet (35) to an outlet,
wherein the first shaft (32) comprises the first running gear (10) and the second shaft (33) comprises the second running gear (20).

7. The system according to claim 6, wherein in a first mode of operation (m1) the second running gear (20) is in direct contact only with the first gearwheel (11), and
wherein in a second mode of operation (m2) the second running gear (20) is in direct contact with the second gearwheel (12), when the dimension of the first gearwheel (11) is reduced by the predetermined amount (w) due to material wear, and
wherein a first frequency spectrum (f1) of the sound produced by the first running gear (10) and the second running gear (20) during the first mode of operation (m1) is different from a second frequency spectrum (f2) of the sound produced by the first running gear (10) and the second running gear (20) during the second mode of operation (m2).

8. The system according to claim 6 or 7, wherein during normal operation the running gears (10, 20) are not in contact with each other.

9. An apparatus, comprising the vacuum pump system according to any of claim 6 - 8 and further comprising a gear wear detection device, **characterized in that**
the gear wear detection device (40) comprises a detection module (41) configured to detect the sound produced by the running gears (10, 20), and
further comprises an analysis module (42) configured to analyze the frequency spectrum of the detected sound, and
further comprises a determination module (43) configured to determine a wear of the running gears (10, 20) dependent on a change of the analyzed frequency spectrum.

10. The apparatus according to claim 9, wherein the determination module (43) is configured to determine if the analyzed frequency spectrum is equal to the frequency spectrum (f2) produced by the running gears (10, 20) in the second mode of operation (m2).

11. The apparatus according to claim 9 or 10,
wherein the gear wear detection device (40) further comprises a displaying module (44) configured to display a gear wear notification to the user if the analyzed frequency spectrum is equal to the second frequency spectrum (f2) produced by the running gears (10, 20) in the second mode of operation (m2).

12. The apparatus according to any of the claims 9 - 11,
wherein the gear wear detection device (40) is a mobile terminal (50).

13. A method for gear wear detection in intermeshing oil-free running gears according to any of the claims 1 - 5, **characterized in that** the method comprises:
detecting (S1) the sound produced by the running gears (10, 20),
analyzing (S2) the frequency spectrum of the detected sound, and
determining (S3) a wear of the running gears (10, 20) dependent on a change of the analyzed frequency spectrum.

14. The method according to claim 13, wherein the determining (S3) comprises: determining if the analyzed frequency spectrum is equal to the frequency spectrum (f2) produced by the running gears (10, 20) in the second mode of operation (m2).

15. The method according to any of the claims 13 or 14, wherein the method further comprises:
displaying (S4) a gear wear notification to the user if the frequency spectrum is equal to the frequency spectrum (f2) produced by the running gears (10, 20) in the second mode of operation (m2).

## Patentansprüche

1. Paar ineinandergreifender, ölfrei laufender Zahnräder für Zwei- oder Mehrwellenvakuumpumpen, umfassend ein erstes laufendes Zahnrad (10) und ein laufendes zweites Zahnrad (20),
**dadurch gekennzeichnet, dass**
mindestens das erste laufende Zahnrad (10) ein erstes Getrieberad (11) und ein zweites Getrieberad (12) umfasst,
wobei das erste Getrieberad (11) und das zweite Getrieberad (12) axial angeordnet sind, und
wobei das erste Getrieberad (11) eine vorbestimmte Anzahl erster Zähne (n11) gleicher Abmessung umfasst und das zweite Getrieberad (12) eine vorbestimmte Anzahl zweiter Zähne (n12) umfasst, wobei die vorbestimmte Anzahl zweiter Zähne (n12) mindestens eins beträgt, und
die vorbestimmte Anzahl zweiter Zähne (n12) eine Abmessung aufweisen, die um einen vorbestimmten Betrag (w) kleiner als die Abmessung der vorbestimmten Anzahl erster Zähne (n11) ist,
wobei das erste Getrieberad (11) aus einem Material mit einem ersten Elastizitätsmodul (E) hergestellt ist und das zweite Getrieberad (12) aus einem Material mit einem zweiten Elastizitätsmodul (E') hergestellt ist und der erste Elastizitätsmodul (E) und der zweite Elastizitätsmodul (E') verschieden sind.

2. Paar ineinandergreifender laufender Zahnräder nach Anspruch 1, wobei der vorbestimmte Betrag (w) dem maximal zulässigen Verschleiß entspricht.

3. Paar ineinandergreifender laufender Zahnräder nach Anspruch 1 oder 2, wobei das erste Getrieberad (11) und das zweite Getrieberad (12) axial getrennt auf derselben Welle oder in direktem Kontakt miteinander angeordnet sind.

4. Paar ineinandergreifender laufender Zahnräder nach Anspruch 1, wobei das Material mit dem ersten Elastizitätsmodul (E) eines aus Polymer ist und das Material mit dem zweiten Elastizitätsmodul (E') eines aus Metall ist.

5. Paar ineinandergreifender laufender Zahnräder nach einem der Ansprüche 1 bis 4, wobei die vorbestimmte Anzahl zweiter Zähne (n12) größer als eins und kleiner als die vorbestimmte Anzahl erster Zähne (n11) ist.

6. Vakuumpumpensystem, umfassend eine Zwei- oder Mehrwellenvakuumpumpe und das Paar ineinandergreifender, ölfrei laufender Zahnräder nach einem der Ansprüche 1 bis 5, **dadurch gekennzeichnet, dass**
die Zwei- oder Mehrwellenvakuumpumpe (30) Folgendes umfasst:
einen Motor (31),
eine erste Welle (32) und mindestens eine zweite Welle (33), wobei die erste Welle (32) und die zweite Welle (33) von dem Motor (31) synchron angetrieben werden, vorzugsweise über einen gemeinsamen Antriebsriemen (34),
wobei die erste Welle (32) ein Pumpenelement (321) aufweist und die zweite Welle (33) ein Pumpenelement (331) aufweist, das mit dem Pumpenelement (321) der ersten Welle (32) zusammenwirkt, um ein gasförmiges Medium von einem Einlass (35) zu einem Auslass zu übertragen,
wobei die erste Welle (32) das erste laufende Zahnrad (10) umfasst und die zweite Welle (33) das zweite laufende Zahnrad (20) umfasst.

7. System nach Anspruch 6, wobei das zweite laufende Zahnrad (20) in einem ersten Betriebsmodus (m1) nur mit dem ersten Getrieberad (11) in direktem Kontakt ist, und
wobei das zweite laufende Zahnrad (20) in einem zweiten Betriebsmodus (m2) mit dem zweiten Getrieberad (12) in direktem Kontakt ist, wenn die Abmessung des ersten Getrieberads (11) wegen Materialverschleiß um den vorbestimmten Betrag (w) reduziert ist, und
wobei ein erstes Frequenzspektrum (f1) des durch das erste laufende Zahnrad (10) und das zweite laufende Zahnrad (20) während des ersten Betriebsmodus (m1) produzierten Schalls von einem zweiten Frequenzspektrum (f2) des durch das erste laufende Zahnrad (10) und das zweite laufende Zahnrad (20) während des zweiten Betriebsmodus (m2) produzierten Schalls verschieden ist.

8. System nach Anspruch 6 oder 7, wobei die laufenden Zahnräder (10, 20) während des Normalbetriebs nicht miteinander in Kontakt sind.

9. Einrichtung, umfassend das Vakuumpumpensystem nach einem der Ansprüche 6 bis 8 und ferner umfassend eine Zahnradverschleißerkennungsvorrichtung, **dadurch gekennzeichnet, dass**
die Zahnradverschleißerkennungsvorrichtung (40) ein Erkennungsmodul (41) umfasst, dazu konfiguriert, den von den laufenden Zahnrädern (10, 20) produzierten Schall zu erkennen, und
ferner ein Analysemodul (42) umfasst, dazu konfiguriert, das Frequenzspektrum des erkannten Schalls zu analysieren, und
ferner ein Bestimmungsmodul (43) umfasst, dazu konfiguriert, einen Verschleiß der laufenden Zahnräder (10, 20) in Abhängigkeit von einer Veränderung des analysierten Frequenzspektrums zu erkennen.

10. Vorrichtung nach Anspruch 9, wobei das Bestimmungsmodul (43) dazu konfiguriert ist, zu bestimmen, ob das analysierte Frequenzspektrum gleich dem von den laufenden Zahnrädern (10, 20) im zweiten Betriebsmodus (m2) produzierten Frequenzspektrum (f2) ist.

11. Einrichtung nach Anspruch 9 oder 10,
wobei Zahnradverschleißerkennungsvorrichtung (40) ferner ein Anzeigemodul (44) umfasst, das dazu konfiguriert ist, dem Benutzer eine Zahnradverschleißmitteilung anzuzeigen, wenn das analysierte Frequenzspektrum gleich dem zweiten Frequenzspektrum (f2), produziert von den laufenden Zahnrädern (10, 20) im zweiten Betriebsmodus (m2), ist.

12. Einrichtung nach einem der Ansprüche 9 bis 11,
wobei die Zahnradverschleißerkennungsvorrichtung (40) ein mobiles Endgerät (50) ist.

13. Verfahren zur Zahnradverschleißerkennung in ineinandergreifenden, ölfrei laufenden Zahnrädern nach einem der Ansprüche 1 bis 5, **dadurch gekennzeichnet, dass** das Verfahren Folgendes umfasst:
Erkennen (S1) des von den laufenden Zahnrädern (10, 20) produzierten Schalls,
Analysieren (S2) des Frequenzspektrums des erkannten Schalls, und
Bestimmen (S3) eines Verschleißes der laufenden Zahnräder (10, 20) in Abhängigkeit von einer Veränderung des analysierten Frequenzspektrums.

14. Verfahren nach Anspruch 13, wobei das Bestimmen (S3) Folgendes umfasst:
Bestimmen, ob das analysierte Frequenzspektrum gleich dem von den laufenden Zahnrädern (10, 20) im zweiten Betriebsmodus (m2) produzierten Frequenzspektrum (f2) ist.

15. Verfahren nach einem der Ansprüche 13 oder 14, wobei das Verfahren ferner Folgendes umfasst:
Anzeigen (S4) einer Zahnradverschleißmitteilung gegenüber dem Benutzer, wenn das Frequenzspektrum gleich dem von den laufenden Zahnrädern (10, 20) im zweiten Betriebsmodus (m2) produzierten Frequenzspektrum (f2) ist.

## Revendications

1. Paire d'engrenages tournants sans huile s'engrenant mutuellement pour pompes à vide à deux ou plusieurs arbres, comprenant un premier engrenage tournant (10) et un deuxième engrenage tournant (20),
**caractérisée en ce que**
au moins le premier engrenage tournant (10) comprend une première roue d'engrenage (11) et une deuxième roue d'engrenage (12),
dans laquelle la première roue d'engrenage (11) et la deuxième roue d'engrenage (12) sont agencées axialement, et
dans laquelle la première roue d'engrenage (11) comprend un nombre prédéterminé de premières dents (n11) de même dimension et la deuxième roue d'engrenage (12) comprend un nombre prédéterminé de deuxièmes dents (n12), dans laquelle le nombre prédéterminé de deuxièmes dents (n12) est au moins un, et
le nombre prédéterminé de deuxièmes dents (n12) a une dimension inférieure à la dimension du nombre prédéterminé de premières dents (n11) d'une quantité prédéterminée (w),
dans laquelle la première roue d'engrenage (11) est constituée d'un matériau ayant un premier module élastique (E) et la deuxième roue d'engrenage (12) est constituée d'un matériau ayant un deuxième module élastique (E'), et le premier module élastique (E) et le deuxième module élastique (E') sont différents.

2. Paire d'engrenages tournants s'engrenant mutuellement selon la revendication 1, dans laquelle la quantité prédéterminée (w) correspond à l'usure maximale admissible.

3. Paire d'engrènement tournant d'engrenant mutuellement selon la revendication 1 ou 2, dans laquelle la première roue d'engrenage (11) et la deuxième roue d'engrenage (12) sont agencées séparées axialement sur le même arbre ou en contact direct l'une avec l'autre.

4. Paire d'engrenages tournants s'engrenant mutuellement selon la revendication 1, dans laquelle le matériau ayant le premier module élastique (E) est un polymère et le matériau ayant le deuxième module élastique (E') est un métal.

5. Paire d'engrenages tournants s'engrenant mutuellement selon l'une quelconque des revendications 1 à 4, dans laquelle le nombre prédéterminé de deuxièmes dents (n12) est supérieur à un et inférieur au nombre prédéterminé de premières dents (n11).

6. Système de pompe à vide, comprenant une pompe à vide à deux ou plusieurs arbres et la paire d'engrenages tournants sans huile s'engrenant mutuellement selon l'une quelconque des revendications 1 à 5, **caractérisé en ce que**
la pompe à vide à deux ou plusieurs arbres (30), comprend
un moteur (31),
un premier arbre (32) et au moins un deuxième arbre (33), dans lequel le premier arbre (32) et le deuxième arbre (33) sont entraînés de manière synchrone par le moteur (31), de préférence via une courroie d'entraînement commune (34),
dans lequel le premier arbre (32) comporte un élément de pompage (321) et le deuxième arbre (33) comporte un élément de pompage (331) qui coopère avec l'élément de pompage (321) du premier arbre (32) afin d'acheminer un milieu gazeux d'une entrée (35) vers une sortie,
dans lequel le premier arbre (32) comprend le premier engrenage tournant (10) et le deuxième arbre (33) comprend le deuxième engrenage tournant (20).

7. Système selon la revendication 6, dans lequel, dans un premier mode de fonctionnement (m1), le deuxième engrenage tournant (20) est en contact direct uniquement avec la première roue d'engrenage (11), et
dans lequel, dans un deuxième mode de fonctionnement (m2), le deuxième engrenage tournant (20) est en contact direct avec la deuxième roue d'engrenage (12), lorsque la dimension de la première roue d'engrenage (11) est réduite de la quantité prédéterminée (w) en raison d'une usure de matériau, et
dans lequel un premier spectre de fréquence (f1) du son produit par le premier engrenage tournant (10) et le deuxième engrenage tournant (20) pendant le premier mode de fonctionnement (m1) diffère d'un deuxième spectre de fréquence (f2) du son produit par le premier engrenage tournant (10) et le deuxième engrenage tournant (20) pendant le deuxième mode de fonctionnement (m2).

8. Système selon la revendication 6 ou 7, dans lequel, pendant un fonctionnement normal, les engrenages tournants (10, 20) ne sont pas en contact l'un avec l'autre.

9. Appareil, comprenant le système de pompe à vide selon l'une quelconque des revendications 6 à 8 et comprenant en outre un dispositif de détection d'usure d'engrenage, **caractérisé en ce que**
le dispositif (40) de détection d'usure d'engrenage comprend un module de détection (41) configuré pour détecter le son produit par les engrenages tournants (10, 20), et
comprend en outre un module d'analyse (42) configuré pour analyser le spectre de fréquence du son détecté, et
comprend en outre un module de détermination (43) configuré pour évaluer une usure des engrenages tournants (10, 20) en fonction d'un changement du spectre de fréquence analysé.

10. Appareil selon la revendication 9, dans lequel le module de détermination (43) est configuré pour déterminer si le spectre de fréquence analysé est égal au spectre de fréquence (f2) produit par les engrenages tournants (10, 20) dans le deuxième mode de fonctionnement (m2).

11. Appareil selon la revendication 9 ou 10,
dans lequel le dispositif (40) de détection d'usure d'engrenage comprend en outre un module d'affichage (44) configuré pour afficher une notification d'usure d'engrenage à l'utilisateur si le spectre de fréquence analysé est égal au deuxième spectre de fréquence (f2) produit par les engrenages tournants (10, 20) dans le deuxième mode de fonctionnement (m2).

12. Appareil selon l'une quelconque des revendications 9 à 11,
dans lequel le dispositif (40) de détection d'usure d'engrenage est un terminal mobile (50).

13. Procédé de détection d'usure d'engrenage dans des engrenages tournants sans huile s'engrenant mutuellement selon l'une quelconque des revendications 1 à 5, **caractérisé en ce que** le procédé comprend :
la détection (S1) du son produit par les engrenages tournants (10, 20),
l'analyse (S2) du spectre de fréquence du son détecté, et
la détermination (S3) d'une usure des engrenages tournants (10, 20) en fonction d'un changement du spectre de fréquence analysé.

14. Procédé selon la revendication 13, dans lequel la détermination (S3) comprend : le fait de déterminer si le spectre de fréquence analysé est égal au spectre de fréquence (f2) produit par les engrenages tournants (10, 20) dans le deuxième mode de fonctionnement (m2).

15. Procédé selon l'une quelconque des revendications 13 ou 14, dans lequel le procédé comprend en outre :
l'affichage (S4) d'une notification d'usure d'engrenage à l'utilisateur si le spectre de fréquence est égal au spectre de fréquence (f2) produit par les engrenages tournants (10, 20) dans le deuxième mode de fonctionnement (m2).
